# DEMANDE DE BREVET EUROPEEN

(11) **EP 3 754 804 A1**
(43) Date de publication de la demande: **23.12.2020**
(21) Numéro de dépôt: 20180899.5
(22) Date de dépôt: 18.06.2020
(51) Int. Cl.: H02H 7/122, H02P 3/22

(54) **PROCÉDÉ D'INHIBITION D'UN ONDULEUR D'UNE CHAÎNE D'ALIMENTATION EN PUISSANCE ÉLECTRIQUE D'UN MOTEUR À AIMANTS PERMANENTS**

(30) Priorité: 18.06.2019 FR 1906524
(71) Demandeur: ALSTOM Transport Technologies, 93400 Saint-Ouen-sur Seine (FR)
(72) Inventeur: SAIZ, Jose, 65800 AUREILHAN (FR); BELLOMO, Jean-Philippe, 65000 TARBES (FR)
(74) Mandataire: Lavoix

(57) **Abrégé**

Ce procédé d'inhibition d'un onduleur (10) d'une chaîne d'alimentation en puissance électrique d'un moteur à aimants permanents (20) dans un système de traction d'un véhicule, notamment un bus, l'onduleur intégrant une pluralité de branches (11, 12, 13), chaque branche comportant un interrupteur bas (11B, 12B, 13B) et un interrupteur haut (11H, 12H, 13H), les interrupteurs étant commandés en ouverture ou en fermeture par un dispositif de commande (60), ledit procédé étant caractérisé en ce qu'il comprend une étape d'inhibition dans laquelle le dispositif de commande (60) inhibe l'onduleur en commandant chaque interrupteur pour que l'onduleur adopte un état de repli prédéfini dans lequel un interrupteur parmi les interrupteurs bas et haut de chaque branche de la pluralité de branche est ouvert et l'autre interrupteur de la même branche est fermé.

## Description

L'invention a pour domaine celui des chaînes d'alimentation en puissance électrique de moteurs à aimants permanents, dans des systèmes de traction de véhicules, notamment de bus.

Selon l'état de la technique, une chaîne d'alimentation comporte un contacteur d'isolement disposé en coupure entre un onduleur et le moteur à aimants permanents, dénommé dans ce qui suit moteur PMM.

En cas de détection d'une défaillance, l'onduleur peut être inhibé de manière à cesser de produire un courant d'alimentation du moteur PMM.

L'inhibition de l'onduleur consiste à actionner en ouverture chacun des interrupteurs commandés que comporte l'onduleur, par application d'un signal de commande adapté, prenant la valeur dite « OFF » ou nulle dans ce qui suit.

Le contacteur d'isolement permet, au moment de l'inhibition de l'onduleur, de pouvoir isoler électriquement l'onduleur du moteur PMM. En effet, le moteur PMM génère une force électromotrice étant donné que son rotor reste maintenu en rotation puisqu'il est couplé aux roues du véhicule qui poursuit son mouvement sur son élan. Si l'onduleur n'était pas isolé du moteur PMM, la force électromotrice appliquée à l'onduleur serait redressée par les diodes de l'onduleur inhibé et aurait pour conséquence de contraindre les composants situés en amont de l'onduleur.

Cependant, le choix d'un moteur PMM est souvent fait afin de réaliser un gain d'espace dans le système de traction pour faciliter son implantation sur le véhicule. L'ajout d'un contacteur d'isolement dans la chaîne d'alimentation fait alors perdre le gain escompté.

L'invention a donc pour but d'éviter la remontée de la force électromotrice générée par le moteur PMM en amont de l'onduleur inhibé, tout en proposant une chaîne de traction présentant un encombrement réduit par rapport à l'état de la technique.

L'invention a donc pour objet un procédé d'inhibition d'un onduleur d'une chaîne d'alimentation en puissance électrique d'un moteur à aimants permanents dans un système de traction d'un véhicule, notamment un bus, l'onduleur intégrant une pluralité de branches, chaque branche comportant un interrupteur bas et un interrupteur haut, les interrupteurs étant commandés en ouverture ou en fermeture par un dispositif de commande, ledit procédé étant caractérisé en ce qu'il comprend une étape d'inhibition dans laquelle le dispositif de commande inhibe l'onduleur en commandant chaque interrupteur pour que l'onduleur adopte un état de repli prédéfini dans lequel un interrupteur parmi les interrupteurs bas et haut de chaque branche de la pluralité de branche est ouvert et l'autre interrupteur de la même branche considéré est fermé.

Selon l'invention, c'est le pilotage de l'onduleur lui-même vers un état de repli spécifique, qui permet d'éviter la remontée de la tension en amont de l'onduleur. Cette solution permet de ne pas avoir besoin de placer un moyen d'isolement additionnel dans la chaîne d'alimentation.

Suivant des modes particuliers de réalisation, le procédé comporte une ou plusieurs des caractéristiques suivantes, prises isolément ou suivant toutes les combinaisons techniquement possibles :
- l'état de repli est commun quel que soit le type de défaillance nécessitant l'inhibition de l'onduleur ;
- l'onduleur est inhibé en réponse à l'application d'un signal de défaillance en entrée du dispositif de commande ;
- le signal de défaillance est un signal de défaillance associé à une défaillance interne de l'onduleur et/ou le signal de défaillance est un signal de défaillance associé à une défaillance externe à l'onduleur ;
- l'état de repli est un premier état de repli tel que l'ensemble des interrupteurs bas sont fermés et l'ensemble des interrupteurs hauts sont ouverts, ou l'état de repli est un second état de repli tel que l'ensemble des interrupteurs bas sont ouverts et l'ensemble des interrupteurs hauts sont fermés ;
- l'état de repli est choisi parmi l'un des premier et second états de repli, lorsqu'un signal de défaillance associé à une défaillance externe est appliqué en entrée du dispositif de commande, et l'état de repli est choisi parmi l'autre des premier et second états de repli, lorsqu'un signal de défaillance associé à une défaillance interne est appliqué en entrée du dispositif de commande ;
- l'état de repli est choisi parmi un ensemble prédéfini d'états de repli, et dans lequel, une fois que l'onduleur a été inhibé par placement dans ledit état de repli, si un signal de défaillance est reçu en entrée du dispositif de commande, le dispositif de commande commande chaque interrupteur pour que l'onduleur adopte un autre état de repli de l'ensemble prédéfini d'états de repli ;
- l'autre état de repli est sélectionné dans l'ensemble prédéfini d'états de repli de manière à être compatible d'une défaillance à l'origine de l'inhibition de l'onduleur ;
- l'ensemble prédéfini d'états de repli est constitué d'un premier état de repli tel que l'ensemble des interrupteurs bas sont fermés et l'ensemble des interrupteurs hauts sont ouverts et d'un second état de repli tel que l'ensemble des interrupteurs bas sont ouverts et l'ensemble des interrupteurs hauts sont fermés.

L'invention a également pour objet un dispositif de contrôle d'un onduleur propre à mettre en œuvre le procédé d'inhibition précédent.

L'invention et ses avantages seront mieux compris à la lecture de la description détaillée qui va suivre d'un mode de réalisation particulier, celui-ci étant donné uniquement à titre d'exemple illustratif et non limitatif, cette description étant faite en se référant aux dessins annexés sur lesquels :
[Fig 1] la figure 1 est une représentation schématique d'un système d'alimentation en puissance électrique d'un moteur à aimants permanents ;
[Fig 2] la figure 2 est une représentation schématique de la chaîne de la figure 1, l'onduleur étant inhibé et placé dans un premier état de repli ;
[Fig 3] la figure 3 correspond à la figure 2 dans laquelle l'onduleur inhibé est placé dans un second état de repli ;
[Fig 4] la figure 4 est un chronogramme, représentant différent signaux en fonction du temps t, de mise en œuvre d'un premier mode de réalisation du procédé selon l'invention ;
[Fig 5] la figure 5 est un chronogramme de mise en œuvre d'une variante du premier mode de réalisation du procédé selon l'invention ;
[Fig 6] la figure 6 est un chronogramme de mise en œuvre d'un second mode de réalisation du procédé selon l'invention ; et,
[Fig 7] la figure 7 est un chronogramme de mise en œuvre d'une variante du second mode de réalisation du procédé selon l'invention.

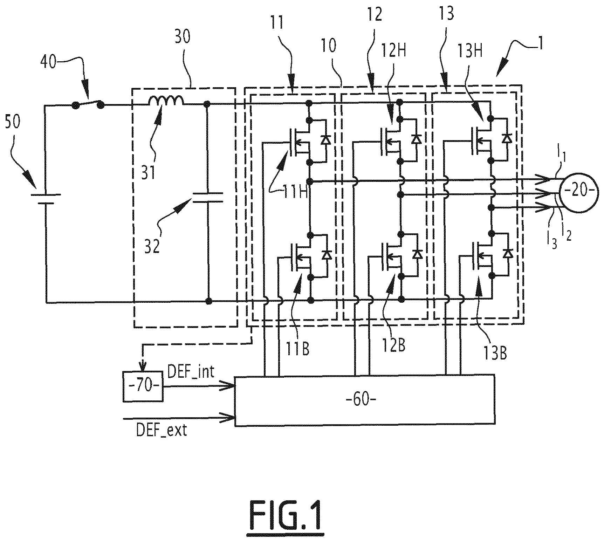

La figure 1 représente, dans un système de traction d'un véhicule, de préférence un bus électrique, une chaîne d'alimentation 1 d'un moteur à aimants permanents 20, à partir d'une source de puissance électrique, telle qu'une batterie 50, via un dispositif de filtrage 30 et un onduleur 10.

En variante, la source de puissance électrique est toute autre source connue de l'homme du métier. Elle est propre à délivrer un courant continu.

Le dispositif de filtrage 30 est un quadripôle dont les deux bornes d'entrée sont connectées aux bornes de la batterie 50 et deux bornes de sortie connectées aux bornes d'entrée de l'onduleur 10. Le dispositif de filtrage 30 comporte par exemple une inductance 31 et un condensateur 32, le condensateur 32 étant placé en parallèle des bornes de sortie.

En amont du dispositif de filtrage 30, le système d'alimentation 1 comporte un interrupteur général 40 permettant d'isoler la source 50 des bornes d'entrée du dispositif de filtrage 30.

L'onduleur comporte deux bornes d'entrée et M lignes de sortie, où M est égal au nombre de phases du moteur à alimenter. Le moteur 20 comportant par exemple trois phases, l'onduleur 10 comporte ainsi trois lignes de sortie, connectées respectivement à chacune des phases du moteur 20.

A partie du courant continu délivré par la source 50, l'onduleur 10 est propre à produire un courant triphasé, chaque ligne de sortie étant parcourue par une composante i1, i2 ou i3 de ce courant triphasé.

De manière connue en soi, l'onduleur 10 comporte des branches 11, 12 et 13 connectées en parallèle entre ses bornes d'entrée.

Chaque branche comporte un interrupteur bas et un interrupteur haut en série l'un de l'autre. Ainsi la branche 11 comporte un interrupteur bas 11B et un interrupteur haut 11H ; la branche 12 comporte un interrupteur bas 12B et un interrupteur haut 12H ; et la branche 13 comporte un interrupteur bas 13B et un interrupteur haut 13H.

Chaque ligne de sortie est connectée à un point milieu d'une branche correspondante.

De préférence, un interrupteur commandé est un transistor de puissance, par exemple un transistor IGBT.

Il est à noter qu'une diode est montée en parallèle de chaque interrupteur, c'est-à-dire entre le drain et la source de l'interrupteur correspondante.

La grille de chaque interrupteur commandé est reliée à un dispositif de commande 60, qui est propre à appliquer sur la grille considérée un signal de commande en ouverture de valeur « OFF », d'ouverture de l'interrupteur, ou un signal de commande en fermeture de valeur « ON » (ou unité), de fermeture de l'interrupteur.

Le dispositif 60 est un calculateur comportant un moyen de mémorisation et un moyen de calcul. Le moyen de mémorisation stocke notamment les instructions d'un programme d'ordinateur dont l'exécution par le moyen de calcul permet le pilotage de l'onduleur 10 et la mise en œuvre du procédé d'inhibition selon l'invention.

Le procédé d'inhibition est de préférence exécuté en fonction de la valeur d'un ou de plusieurs signaux de défaillance reçus par le dispositif 60.

Il peut s'agir d'un signal de défaillance interne DEF_int élaboré par une unité de surveillance 70 de l'onduleur 10 et/ou d'un signal de défaillance externe DEF_ext élaboré par au moins un autre dispositif de surveillance. Ainsi, par exemple, le signal DEF_int est élaboré à partir de la vérification du bon état de fonctionnement de l'interrupteur et/ou de son circuit rapproché, ou allumeur, de mise en œuvre : la tension aux bornes de l'interrupteur est-elle en cohérence avec la commande reçue ? les niveaux des alimentations de l'allumeur ne sont-ils pas trop bas ? etc. Par exemple encore, le signal DEF_ext est élaboré à partir de grandeurs de fonctionnement du système global : le courant dans les phases du moteur dépasse-t-il un seuil ? la tension d'alimentation DC de l'onduleur dépasse-t-elle un seuil ? etc.

L'unité de surveillance 70 permet, à partir de différentes grandeurs mesurées dans l'onduleur 10, de générer le signal DEF_int indicatif d'une défaillance interne de l'onduleur 10.

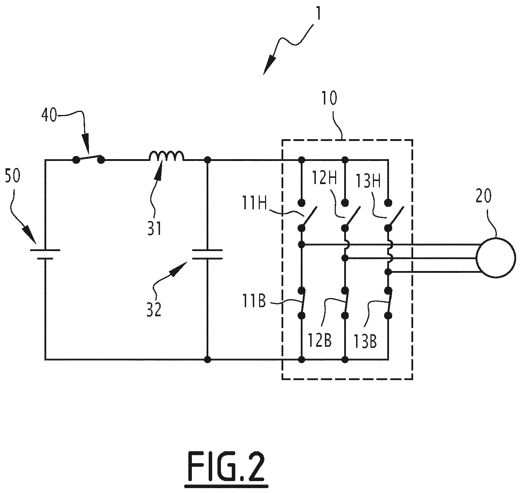

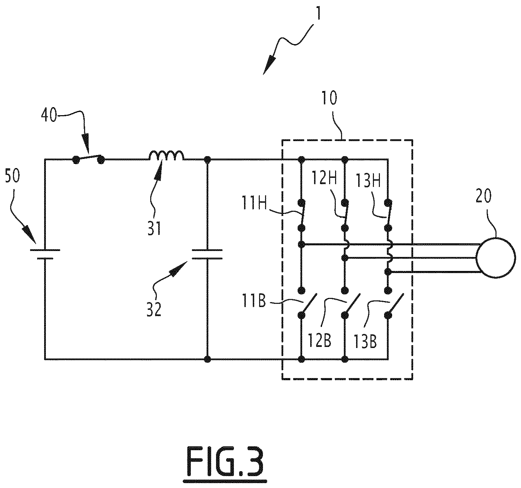

Selon l'invention, lorsque l'onduleur 10 doit être inhibé, le dispositif de commande 60 applique des signaux de commande aux différents interrupteurs de l'onduleur 10 de manière à placer l'onduleur soit dans un premier état de repli, représenté à la figure 2, soit dans un second état de repli, représenté à la figure 3.

Dans le premier état de repli, les interrupteurs bas 11B, 12B et 13B sont placés dans la position fermée, alors que les interrupteurs hauts 11H, 12H et 13H sont placés en position ouverte.

Dans le second état de repli, les interrupteurs bas 11B, 12B et 13B sont placés dans la position ouverte, alors que les interrupteurs hauts 11H, 12H et 13H sont placés en position fermée.

Le second état de repli est donc « opposé » au premier état de repli.

Dans le premier état de repli (respectivement le second état de repli), la mise en conduction (état fermé) des interrupteurs bas (respectivement hauts) et l'ouverture des interrupteurs hauts (respectivement bas), empêche tout échange d'énergie entre le moteur 20 et le circuit 30 en amont de l'onduleur 10.

Une fois que l'onduleur 10 est placé dans l'un ou l'autre des états de repli, le moteur 20 est en situation de « court-circuit symétrique ». A priori, cette situation ne risque pas d'endommager le moteur 20 lui-même et/ou la chaîne d'alimentation du moteur puisque cette situation de court-circuit n'existe que pendant une durée faible, le temps pour le véhicule de s'arrêter. Par exemple, pour le cas d'un bus électrique, on estime à environ une minute le temps nécessaire pour que le véhicule s'immobilise après un évènement nécessitant l'inhibition de l'onduleur.

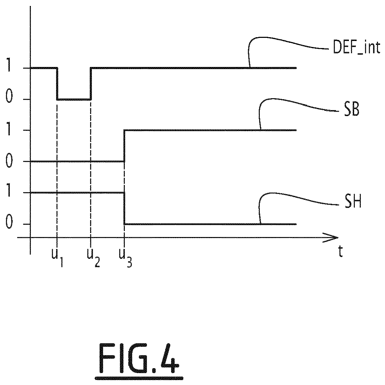

En se référant maintenant à la figure 4, un premier mode de réalisation du procédé d'inhibition va être présenté.

Périodiquement, l'unité 70 détermine la valeur du signal de défaillance DEF_int de l'onduleur 10 à partir de grandeurs mesurées à l'intérieur de l'onduleur 10. Ces grandeurs sont par exemple la tension aux bornes de l'interrupteur, les niveaux des alimentations de l'allumeur, etc.

Par défaut, le signal DEF_int prend par convention la valeur « 1 ».

Dès que l'unité 70 détecte une défaillance nécessitant l'inhibition de l'onduleur 10, le signal DEF_int passe temporairement à la valeur « 0 ». Ceci est représenté sur la figure 4 où à l'instant u₁ le signal DEF_int, qui était jusque-là à la valeur « 1 », prend la valeur « 0 ». Le signal DEF_int prend la valeur « 0 » sur un intervalle de temps prédéterminé entre les instants u₁ et u₂ avant de revenir dans l'état par défaut « 1 ».

Le dispositif de contrôle 60 détectant à l'instant u₁ le changement de valeur du signal DEF_int décide d'inhiber l'onduleur 10. Pour cela, il commande les différents interrupteurs de l'onduleur 10 de manière à placer l'onduleur dans le premier état de repli.

Ainsi, à partir de l'instant u₃ chacun des interrupteurs bas 11B, 12B et 13B reçoit un signal de commande SB de valeur unité (« ON »), et simultanément chacun des interrupteurs hauts 11H, 12H et 13H reçoit un signal de commande SH de valeur nulle (« OFF »).

Au-delà de l'instant u₃, l'onduleur 10 se trouve dans le premier état de repli.

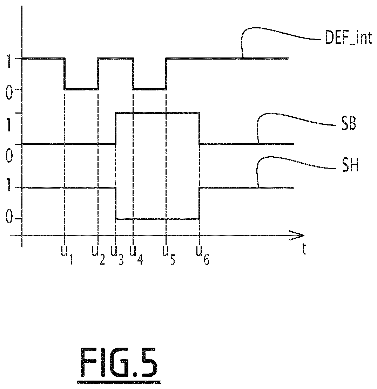

Avantageusement, comme représenté à la figure 5, le procédé selon le premier mode de réalisation se poursuit de la manière suivante.

Si après avoir placé l'onduleur 10 dans le premier état de repli, le signal DEF_int passe transitoirement de nouveau à la valeur « 0 » (ce qui est représenté sur la figure 5 à partir de l'instant u₄), l'unité de surveillance 70 ayant constaté que le placement de l'onduleur 10 dans le premier état de repli ne permettait pas de palier à la défaillance détectée, le dispositif de contrôle 60 bascule alors l'onduleur 10 inhibé du premier état de repli vers le second état de repli. Ainsi, à partir de l'instant u₆, le dispositif 60 applique des signaux de commande SH de valeur unité (« ON ») aux interrupteurs hauts de l'onduleur et des signaux de commande SB de valeur nulle (« OFF ») aux interrupteurs bas de l'onduleur. Au-delà de l'instant u₆ l'onduleur 10 est dans le second état de repli.

Cette variante du premier mode de réalisation consiste ainsi à placer l'onduleur d'abord dans l'un des deux états de repli, puis, si le défaut persiste, à placer l'onduleur dans l'autre état de repli.

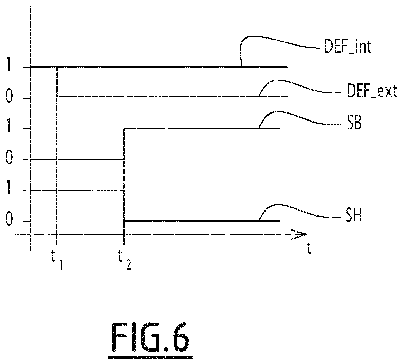

En se référant maintenant à la figure 6, un second mode de réalisation du procédé d'inhibition va être présenté.

L'unité 60 reçoit, outre le signal DEF_int comme dans le premier mode de réalisation, le signal de défaillance DEF_ext élaboré par un autre dispositif (non représenté). Pour élaborer le signal DEF ext, ce dispositif utilise par exemple le courant dans les phases du moteur, la tension d'alimentation DC de l'onduleur, etc.

Par défaut, le signal DEF ext prend par convention la valeur « 1 ».

Dès qu'une défaillance externe nécessitant l'inhibition de l'onduleur 10 est détectée, le signal DEF_ext passe à la valeur « 0 ». Ceci est représenté sur la figure 6 où à l'instant t₁ le signal DEF ext, qui était jusque-là à la valeur « 1 », prend la valeur « 0 ».

Parallèlement, le signal DEF_int reste à sa valeur unité par défaut.

Le dispositif de contrôle 60 détectant à l'instant t₁ le changement de valeur du signal DEF_ext décide d'inhiber l'onduleur 10. Pour cela, il commande les différents interrupteurs de l'onduleur 10 de manière à le placer dans le premier état de repli.

Ainsi, à partir de l'instant t₂, chacun des interrupteurs bas 11B, 12B et 13B reçoit un signal de commande SB prenant la valeur unité (« ON »), et simultanément chacun des interrupteurs hauts 11H, 12H et 13H reçoit un signal de commande SH prenant la valeur basse (« OFF »).

Au-delà de l'instant t₂, l'onduleur 10 se trouve dans le premier état de repli.

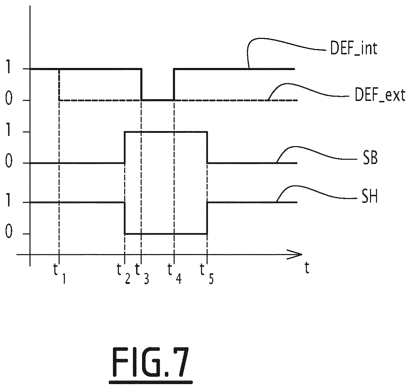

Avantageusement, comme représenté à la figure 7, le procédé selon le second mode de réalisation se poursuit de la manière suivante.

Si après avoir placé l'onduleur 10 dans le premier état de repli, le signal DEF_int passe transitoirement à la valeur « 0 » (ce qui est représenté sur la figure 7 à partir de l'instant t₃ et jusqu'à l'instant t₄), l'unité de surveillance 70 ayant constaté que le placement de l'onduleur 10 dans le premier état de repli conduisait à une défaillance interne, le dispositif de contrôle 60 bascule alors l'onduleur 10 inhibé du premier état de repli vers le second état de repli. Ainsi, à partir l'instant t₅, le dispositif 60 applique des signaux de commande SH de valeur unité (« ON ») aux interrupteurs hauts de l'onduleur et des signaux de commande SB de valeur nulle (« OFF ») aux interrupteurs bas de l'onduleur. Au-delà de l'instant t₅ l'onduleur 10 est dans le second état de repli.

Cette variante du second mode de réalisation consiste ainsi à placer l'onduleur d'abord dans l'un des deux états de repli pour palier à une défaillance externe, puis si cela occasionne une défaillance interne, à placer l'onduleur dans l'autre état de repli.

En variante d'autres causes peuvent être prises en considération pour commander l'inhibition de l'onduleur 10. Cependant, l'événement provoquant la décision d'inhibition de l'onduleur est la plupart du temps la détection d'un défaut interne ou d'un défaut externe à la chaîne d'alimentation électrique.

Il est à souligner que selon les premier et second modes de réalisation des figures 4 et 6, l'onduleur 10 est placé dans un même état de repli prédéterminé quelle que soit la nature (interne ou externe) de la défaillance détectée.

Avantageusement, selon les variantes des premier et second modes de réalisation des figures 5 et 7, ce n'est qu'une fois l'onduleur inhibé, que l'on choisit éventuellement de modifier l'état de repli de l'onduleur pour le placer dans un autre état de repli.

Les variantes des premier ou du second modes de réalisation permettent avantageusement de mettre l'onduleur dans un état de repli compatible avec le défaut éventuel. Ainsi pour un court-circuit entre la borne positive de la source 50 et l'une des phases du moteur, l'état de repli compatible est le second état de repli. En revanche pour le cas d'un court-circuit entre la borne négative de la source 50 et l'une des phases du moteur, l'état de repli compatible est le premier état de repli.

Bien évidemment cette stratégie fonctionne si l'on peut exclure les modes de défaillance communs et si la probabilité de pannes multiples reste faible.

Quel que soit le mode de réalisation de l'invention, le dispositif de commande 60 est propre à piloter systématiquement l'onduleur dans le premier ou le deuxième état de repli dès qu'un défaut, notamment externe ou interne, est détecté.

En d'autres termes, le dispositif de commande 60 est propre à piloter systématiquement l'onduleur dans le premier ou le deuxième état de repli dans un délai inférieur à 5 secondes, de préférence à 100 ms, après qu'un défaut, notamment externe ou interne, ait été détecté, avantageusement sans procéder à des mesures de grandeurs électriques supplémentaires.

## Revendications

1. Procédé d'inhibition d'un onduleur (10) d'une chaîne d'alimentation en puissance électrique d'un moteur à aimants permanents (20) dans un système de traction d'un véhicule, notamment un bus, l'onduleur intégrant une pluralité de branches (11, 12, 13), chaque branche comportant un interrupteur bas (11B, 12B, 13B) et un interrupteur haut (11H, 12H, 13H), les interrupteurs étant commandés en ouverture ou en fermeture par un dispositif de commande (60), ledit procédé étant **caractérisé en ce qu'**il comprend une étape d'inhibition dans laquelle le dispositif de commande (60) inhibe l'onduleur en commandant chaque interrupteur pour que l'onduleur adopte un état de repli prédéfini dans lequel un interrupteur parmi les interrupteurs bas et haut de chaque branche de la pluralité de branche est ouvert et l'autre interrupteur de la même branche est fermé.

2. Procédé selon la revendication 1, dans lequel l'état de repli est commun quel que soit le type de défaillance nécessitant l'inhibition de l'onduleur.

3. Procédé selon la revendication 1 ou la revendication 2, dans lequel l'onduleur est inhibé en réponse à l'application d'un signal de défaillance en entrée du dispositif de commande (60).

4. Procédé selon la revendication 3, dans lequel le signal de défaillance est un signal de défaillance associé à une défaillance interne de l'onduleur et/ou le signal de défaillance est un signal de défaillance associé à une défaillance externe à l'onduleur.

5. Procédé selon l'une quelconque des revendications 1 à 4, dans lequel l'état de repli est un premier état de repli tel que l'ensemble des interrupteurs bas sont fermés et l'ensemble des interrupteurs hauts sont ouverts, ou l'état de repli est un second état de repli tel que l'ensemble des interrupteurs bas sont ouverts et l'ensemble des interrupteurs hauts sont fermés.

6. Procédé selon la revendication 5, dans lequel l'état de repli est choisi parmi l'un des premier et second états de repli, lorsqu'un signal de défaillance associé à une défaillance externe est appliqué en entrée du dispositif de commande, et l'état de repli est choisi parmi l'autre des premier et second états de repli, lorsqu'un signal de défaillance associé à une défaillance interne est appliqué en entrée du dispositif de commande.

7. Procédé selon l'une quelconque des revendications 1 à 6, dans lequel l'état de repli est choisi parmi un ensemble prédéfini d'états de repli, et dans lequel, une fois que l'onduleur a été inhibé par placement dans ledit état de repli, si un signal de défaillance est reçu en entrée du dispositif de commande (60), le dispositif de commande (60) commande chaque interrupteur pour que l'onduleur (10) adopte un autre état de repli de l'ensemble prédéfini d'états de repli.

8. Procédé selon la revendication 7, dans lequel l'autre état de repli est sélectionné dans l'ensemble prédéfini d'états de repli de manière à être compatible d'une défaillance à l'origine de l'inhibition de l'onduleur (10).

9. Procédé selon la revendication 7 ou la revendication 8, dans lequel l'ensemble prédéfini d'états de repli est constitué d'un premier état de repli tel que l'ensemble des interrupteurs bas sont fermés et l'ensemble des interrupteurs hauts sont ouverts et d'un second état de repli tel que l'ensemble des interrupteurs bas sont ouverts et l'ensemble des interrupteurs hauts sont fermés.

10. Dispositif de contrôle (60) d'un onduleur (10) d'une chaîne d'alimentation en puissance électrique d'un moteur à aimants permanents (20) dans un système de traction d'un véhicule, notamment un bus, l'onduleur intégrant une pluralité de branches (11, 12, 13), chaque branche comportant un interrupteur bas (11B, 12B, 13B) et un interrupteur haut (11H, 12H, 13H), les interrupteurs étant commandés en ouverture ou en fermeture par ledit dispositif de commande (60), le dispositif de commande étant **caractérisé en ce qu'**il est propre à mettre en œuvre le procédé d'inhibition selon l'une quelconque des revendications 1 à 8.
